# EUROPEAN PATENT SPECIFICATION

(11) **EP 3 386 742 B1**
(45) Date of publication and mention of the grant of the patent: **03.08.2022**
(21) Application number: 16798606.6
(22) Date of filing: 08.11.2016
(51) Int. Cl.: B32B 5/02, B32B 27/12, B32B 27/32

(54) **MONOLAYER FILMS, AND ARTICLES MADE THEREFROM**
EINSCHICHTIGE FOLIEN UND DARAUS HERGESTELLTE ARTIKEL
FILMS MONOCOUCHE ET ARTICLES RÉALISÉS À PARTIR DE CEUX-CI

(30) Priority: 11.12.2015 US 201562266209 P
(43) Date of publication of application: 17.10.2018
(73) Proprietor: Dow Global Technologies LLC, Midland, MI 48674 (US); Dow Quimica Mexicana S.A.de C.V., 06500 Cuauhtemoc (MX)
(72) Inventor: KALIHARI, Vivek, Freeport TX 77541 (US); ARTEAGA LARIOS, Fabricio, Freeport, Texas 77541 (US); DEGROOT, Jacquelyn A., Freeport TX 77541 (US)
(74) Representative: Boult Wade Tennant LLP
(86) International application number: PCT/US2016/060941
(87) International publication number: WO 2017/099924

(56) References cited:
- EP-A1- 2 275 254
- WO-A1-2004/054801
- WO-A1-2010/123685
- WO-A1-2012/052445
- WO-A1-2017/099923
- US-A1- 2007 092 704

## Description

### TECHNICAL FIELD

Embodiments of the present disclosure generally relate to applications of monolayer films to make ultrasonically-bonded laminates.

### BACKGROUND

Cloth-like backsheets have become increasingly desirable for use in hygiene absorbent products, such as, for example, diapers, adult incontinence products, and feminine hygiene articles. Cloth-like backsheets typically include a nonwoven substrate and a film laminated together, where the main objectives are to combine the key attributes of each material to provide good barrier properties (to primarily contain fluids), opacity, tensile properties, and/or haptics (e.g., softness). Depending on the lamination technology involved, the aforementioned attributes of the backsheet can vary.

Several different lamination technologies exist for joining films and nonwovens, and can include, for example, extrusion coating, hot melt adhesive, solvent-less adhesives, and ultrasonic bonding. Each lamination technique has its own particularities. In recent years, ultrasonic bonding has become an emerging lamination technology for use in producing backsheets; however, it is not without its challenges. One major challenge observed when using ultrasonic bonding is that where different types of or incompatible materials are used for the nonwoven substrate and the film, (e.g., a polyethylene-based film laminated to a polypropylene nonwoven substrate), adhesion is adversely affected often resulting in a poor bond between the two. In addition, pinholes can result which can destroy the liquid barrier functionality of the backsheet. Finally, polyethylene film has a low coefficient of friction, and therefore, may degrade or breakdown during ultrasonic bonding.

EP 2275254 relates to coated substrates and packages prepared therefrom. WO 2004/054801 relates to a composite laminate structure for a disposable nonwoven product suitable for use in medical or other hygienic applications. WO 2010/123685 relates to thermoplastic film, methods for making thermoplastic film, and the use of thermoplastic film as battery separator film. WO 2012/052445 relates to a coated fabric, a bag produced therefrom, a packaging machine for bags and a method for filling the bags. US 2007/092704 A1 discloses the ultrasonic bonding of a nonwoven layer to a film layer.

Accordingly, alternative monolayer films that can provide good adhesion to a nonwoven polypropylene substrate, and articles comprising monolayer films having good bonding, good haptics, reduced pinholes, and/or low noise may be desired.

### SUMMARY

In a first aspect of the invention there is provided the ultrasonically bonded laminate of claim 1, comprising:
a monolayer film comprising a blend of (a) from 50 to 90 wt.% of a linear polyethylene having a density ranging from 0.925 g/cc to 0.970 g/cc and a melt index, I₂, from 0.1 to 15 g/10 min, (b) from 10 to 50 wt.% of polypropylene having a melt flow rate from 0.1 to 100 g/10 min, and (c) optionally, a low density polyethylene; and
a nonwoven substrate at least partially ultrasonically bonded to the monolayer film.

Disclosed herein are monolayer films. The monolayer films comprise a blend of (a) from 50 to 90 wt.% of a linear polyethylene having a density ranging from 0.925 g/cc to 0.970 g/cc and a melt index, 12, from 0.1 to 15 g/10 min, (b) from 10 to 50 wt.% of polypropylene having a melt flow rate from 0.1 to 100 g/10 min, and (c) optionally, a low density polyethylene.

Additional features and advantages of the embodiments will be set forth in the detailed description which follows, and in part will be readily apparent to those skilled in the art from that description or recognized by practicing the embodiments described herein, including the examples. It is to be understood that both the foregoing and the following description describe various embodiments and are intended to provide an overview or framework for understanding the nature and character of the claimed subject matter.

### DETAILED DESCRIPTION

Reference will now be made in detail to monolayer films and ultrasonically-bonded laminates. The ultrasonically-bonded laminates may be used to produce cloth-like backsheets. It is noted, however, that this is merely an illustrative implementation of the embodiments disclosed herein. The embodiments are applicable to other technologies that are susceptible to similar problems as those discussed above. For example, ultrasonically-bonded laminates used to produce cloth-like wipes, face masks, surgical gowns, tissues, bandages and wound dressings are clearly within the purview of the present embodiments.

The ultrasonically-bonded laminates comprise a monolayer film and a nonwoven substrate at least partially ultrasonically bonded to the monolayer film. As used herein, "ultrasonic bonding" includes ultrasonic welding.

### Monolayer Film

The monolayer film comprises a blend of a linear polyethylene, a polypropylene, and optionally, a low density polyethylene. The blend comprises from 50 - 90 wt.%, by weight of the blend, of the linear polyethylene. In some embodiments, the blend comprises from 55 - 90 wt.%, from 60 - 90 wt.%, from 60 - 85 wt.%, or from 60 - 80 wt.%, by weight of the blend, of the linear polyethylene. The term "linear polyethylene" is defined to mean any linear or substantially linear polyethylene copolymer or homopolymer. The linear polyethylene can be made by any process, such as, gas phase, solution phase, or slurry or combinations thereof, using any type of reactor or reactor configuration known in the art, e.g., fluidized bed gas phase reactors, loop reactors, stirred tank reactors, batch reactors in parallel, series, and/or any combinations thereof. In some embodiments, gas or slurry phase reactors are used. The linear polyethylene may be made using chromium, Ziegler-Natta, metallocene, constrained geometry, single site catalysts, or combinations thereof.

The monolayer film may be a monolayer cast film.

The linear polyethylene comprises greater than 50%, by weight, of its units derived from the ethylene monomer, for example, at least 60%, at least 70%, at least 80%, at least 90%, at least 92%, at least 95%, at least 97%, by weight, of the units derived from the ethylene monomer; and less than 30%, for example, less than 25%, less than 20%, less than 15%, less than 10%, less than 5%, less than 3%, by weight, of units derived from the one or more alpha-olefin comonomers.

Suitable alpha-olefin comonomers include a C4-C20 alpha-olefin, a C4-C12 alpha-olefin, a C3-C10 alpha-olefin, a C3-C8 alpha-olefin, a C4-C8 alpha-olefin, or a C6-C8 alpha-olefin. In some embodiments, the alpha-olefin is selected from the group consisting of propylene, 1-butene, 1-pentene, 1-hexene, 4-methyl-1-pentene, 1-heptene, 1-octene, 1-nonene and 1-decene. In other embodiments, the alpha-olefin is selected from the group consisting of propylene, 1-butene, 1-hexene, and 1-octene. In further embodiments, the alpha-olefin is selected from the group consisting of 1-hexene and 1-octene.

Other examples of suitable linear polyethylenes are further defined in U.S. Pat. No. 5,272,236, U.S. Pat. No. 5,278,272, U.S. Pat. No. 5,582,923 and U.S. Pat. No. 5,733,155, which include substantially linear polyethylenes; homogeneously branched linear polyethylenes, such as those in U.S. Pat. No. 3,645,992; heterogeneously branched linear polyethylenes, such as those prepared according to the process disclosed in U.S. Pat. No. 4,076,698; and/or blends thereof (such as those disclosed in U.S. Pat. No. 3,914,342 or U.S. Pat. No. 5,854,045). In some embodiments, the linear polyethylenes may include ELITE^{™} resins and DOWLEX^{™} resins (such as DOWLEX^{™} 2036G, DOWLEX^{™} 2037, DOWLEX^{™} 2027, DOWLEX^{™} 2083) sold by The Dow Chemical Company; DMDA 8007 NT 7, DMDA 8904, DMDA 8907, available from The Dow Chemical Company; HDPE HD 6908, HDPE 6719, LLDPE LL 6407.67, or LLDPE LL 8360 sold by Exxon Mobil Corporation.

The linear polyethylene has a density in the range of from 0.925 to 0.970 g/cc. All individual values and subranges from 0.925 - 0.970 g/cc are included and disclosed herein. For example, in some embodiments, the linear polyethylene has a density of 0.935 - 0.970 g/cc. In other embodiments, the linear polyethylene has a density of 0.935 - 0.965 g/cc. Densities disclosed herein are determined according to ASTM D-792.

The linear polyethylene has a melt index of about 0.1-15 g/ 10 min. All individual values and subranges from 0.1-15 g/10 min are included and disclosed herein. For example, in some embodiments, the linear polyethylene has a melt index of 0.5-15 g/10 min. In other embodiments, the linear polyethylene has a melt index of 0.5-12 g/10 min. In further embodiments, the linear polyethylene has a melt index of 1-10 g/10 min. Melt index, or I₂, for ethylene-based polymers is determined according to ASTM D1238 at 190° C, 2.16 kg.

In some embodiments, the linear polyethylene may have a polymer backbone that lacks measurable or demonstrable long chain branches. As used herein, "long chain branching" means branches having a chain length greater than that of any short chain branches, which are a result of comonomer incorporation. The long chain branch can be about the same length or as long as the length of the polymer backbone. In some embodiments, the linear polyethylene is substituted with an average of from 0.01 long chain branches/1000 carbons to 3 long chain branches/1000 carbons, from 0.01 long chain branches/1000 carbons to 1 long chain branches/1000 carbons, from 0.05 long chain branches/1000 carbons to 1 long chain branches/1000 carbons. In other embodiments, the linear polyethylene is substituted with an average of less than 1 long chain branches/1000 carbons, less than 0.5 long chain branches/1000 carbons, or less than 0.05 long chain branches/1000 carbons, or less than 0.01 long chain branches/1000 carbons. Long chain branching (LCB) can be determined by conventional techniques known in the industry, such as ¹³C nuclear magnetic resonance (¹³C NMR) spectroscopy, and can be quantified using, for example, the method of Randall (Rev. Macromol. Chem. Phys., C29 (2 & 3), p. 285-297). Two other methods that may be used include gel permeation chromatography coupled with a low angle laser light scattering detector (GPC-LALLS), and gel permeation chromatography coupled with a differential viscometer detector (GPC-DV). The use of these techniques for long chain branch detection, and the underlying theories, have been well documented in the literature. *See, for example,* Zimm, B. H. and Stockmayer, W. H., J. Chem. Phys., 17, 1301 (1949) and Rudin A., Modern Methods of Polymer Characterization, John Wiley & Sons, New York (1991), pp. 103-112.

The blend also comprises from 10 to 50 wt.% of polypropylene. The polypropylene may be a polypropylene homopolymer, a polypropylene copolymer, or blends thereof. The polypropylene homopolymer may be isotactic, atactic, or syndiotactic. In some embodiments, the polypropylene homopolymer is isotactic. The polypropylene copolymer may be a propylene/olefin copolymer (random or block) or a polypropylene impact copolymer. Impact polypropylene copolymers may also include heterophasic polypropylene copolymers, where polypropylene is the continuous phase and an elastomeric phase is uniformly dispersed therein. For polypropylene/olefin copolymers, examples of suitable olefin comonomers include ethylene, C₄-C₂₀ α-olefins, such as 1-butene, 1-pentene, 1-hexene, 4-methyl-1-pentene, 1-heptene, 1-octene, 1-decene, or 1-dodecene; C₄-C₂₀ diolefins, such as 1,3-butadiene, 1,3-pentadiene, norbornadiene, 5-ethylidene-2-norbornene (ENB) and dicyclopentadiene; C₈-C₄₀ vinyl aromatic compounds, such as styrene, o-, m-, and p-methylstyrene, divinylbenzene, vinylbiphenyl, vinylnapthalene; and halogen-substituted C₈-C₄₀ vinyl aromatic compounds, such as chlorostyrene and fluorostyrene. In some embodiments, the polypropylene copolymers include propylene/ethylene copolymer, propylene/1-butene copolymer, propylene/1-hexene copolymer, propylene/4-methyl-1-pentene copolymer, propylene/1-octene copolymer, or propylene/ethylene/1-butene copolymer.

Suitable polypropylenes are formed by means within the skill in the art, for example, using Ziegler-Natta catalysts, a single-site catalysts (metallocene or constrained geometry), or non-metallocene, metal-centered, heteroaryl ligand catalysts. Exemplary polypropylenes may include PP 3155 commercially available from the Exxon Mobil Corporation, USA, polypropylene 6231, commercially available from LyondellBasell Industries, USA polypropylene polymers commercially available from Braskem under various tradenames and/or trademarks, or PROFAX^{®} (commercially available from Lyondell Basell).

The polypropylene has a melt flow rate (MFR) from 0.1 g/10 min to 100 g/10 min. All individual values and subranges from 0.1 g/10 min to 100 g/10 min are included and disclosed herein. For example, in some embodiments, the polypropylene has a melt flow rate from 1 g/10 min to 75 g/10 min, from 2 g/10 min to 50 g/10 min, from 10 g/10 min to 45 g/10 min, or from 15 g/10 min to 40 g/10 min, as measured in accordance with ASTM D1238 (230°C, 2.16 kg). In embodiments herein, the polypropylene may have a density of 0.890 to 0.920 g/cc. All individual values and subranges from 0.890 to 0.920 g/cc are included and disclosed herein. For example, in some embodiments, polypropylene has a density of 0.900 to 0.920 g/cc, or from 0.890 to 0.915 g/cc. The density may be determined according to ASTM D-792.

In some embodiments herein, the blend may further comprise an optional low density polyethylene (LDPE). The blend may comprise from 0 to 40 wt.%, based on the total weight of polymers present in the blend, of a LDPE. All individual values and subranges from 0 to 40 wt.% are included and disclosed herein. For example, in some embodiments, the blend may comprise from 5 to 40 wt.%, based on the total weight of polymers present in the blend, of a LDPE. In other embodiments, the blend may comprise from 5 to 30 wt.%, based on the total weight of polymers present in the blend, of a LDPE. In further, embodiments, the blend may comprise from 5 to 25 wt.%, based on the total weight of polymers present in the blend, of a LDPE.

In embodiments herein, the optional LDPE present in the blend may have a density of about 0.915-0.935 g/cc. All individual values and subranges from 0.915-0.930 g/cc are included and disclosed herein. For example, in some embodiments, the LDPE has a density of 0.915 - 0.925 g/cc. In other embodiments, the LDPE has a density of 0.915 - 0.920 g/cc. In embodiments herein, the optional LDPE present in the blend may have a melt index of 0.1-15 g/10 min. All individual values and subranges from 0.1-15 g/10 min are included and disclosed herein. For example, in some embodiments, the LDPE has a melt index of 1-12 g/10 min, or 2 to 12 g/10 min. In other embodiments, the LDPE has a melt index of 2-10 g/10 min.

The optional LDPE present in the core layer may have a melt strength of greater than 5 cN. All individual values and subranges of greater than 5 cN are included and disclosed herein. For example, in some embodiments, the optional LDPE has a melt strength of from 6-25 cN. In other embodiments, the optional LDPE has a melt strength of from 6-24, 6-22, 6-20, 6-18, 6-16, or 6-14 cN. In further embodiments, the optional LDPE has a melt strength of from 6-12 cN. In further embodiments, the optional LDPE has a melt strength of from 6-10 cN. In even further embodiments, the optional LDPE has a melt strength of from 6-8 cN.

The optional LDPE present in the blend may also be used to refer to "high pressure ethylene polymer" or "highly branched polyethylene" present in the polypropylene polymer blend may include branched polymers that are partly or entirely homopolymerized or copolymerized in autoclave or tubular reactors at pressures above 14,500 psi (100 MPa) with the use of free-radical initiators, such as peroxides (*see* for example U.S. Pat. No. 4,599,392). Examples of suitable LDPEs present in the blend may include ethylene homopolymers, and high pressure copolymers, including ethylene interpolymerized with, for example, vinyl acetate, ethyl acrylate, butyl acrylate, acrylic acid, methacrylic acid, carbon monoxide, or combinations thereof. Exemplary LDPE resins may include resins sold by The Dow Chemical Company, such as, LDPE 722, LDPE 5004, and LDPE 621i. Other exemplary LDPE resins are described in WO 2005/023912.

The blend may further comprise a compatibilizer agent capable of compatibilizing blends of polyethylene and polypropylene polymers. Suitable compatibilizer agents include olefin plastomers and elastomers, such as, ethylene-based and propylene-based copolymers available under the trade name VERSIFY^{™} or INTUNE^{™} (from The Dow Chemical Company), SURPASS^{™} (from Nova Chemicals), and VISTAMAXX^{™} (from Exxon Mobil Corporation). Exemplary compatibilizers may include the VERSIFY^{™} 3401 compatibilizer (from The Dow Chemical Company), the VISTAMAXX^{™} 6202 compatibilizer (from Exxon Mobil Corporation), or Borealis BORSOFT^{™} (commercially available from Borealis of Denmark). ). The compatibilizer agent can be included in the blend at levels typically used in the art to achieve their desired purpose. In some examples, the compatibilizer agent are included in amounts ranging from 0-20 wt.% of the blend, 0-15 wt.% of the blend, 0.001-10 wt.% of the blend, 0.001-5 wt.% of the blend, 0.005-3 wt.% of the blend, or 0.05-2 wt.% of the blend.

The monolayer film may independently comprise one or more additives. Such additives may include antioxidants (e.g., hindered phenolics, such as, IRGANOX^{®} 1010 or IRGANOX^{®} 1076, supplied by Ciba Geigy), phosphites (e.g., IRGAFOS^{®} 168, also supplied by Ciba Geigy), cling additives (e.g., PIB (polyisobutylene)), Standostab PEPQ^{™} (supplied by Sandoz), pigments, colorants, fillers (e.g., calcium carbonate, mica, talc, kaolin, perlite, diatomaceous earth, dolomite, magnesium carbonate, calcium sulfate, barium sulfate, glass beads, polymeric beads, ceramic beads, natural and synthetic silica, aluminum trihydroxide, magnesium trihydroxide, wollastonite, whiskers, wood flour, lignine, starch), TiO₂, anti-stat additives, flame retardants, slip agents, antiblock additives, biocides, antimicrobial agents, and clarifiers/nucleators (e.g., HYPERFORM^{™} HPN-20E, MILLAD^{™} 3988, MILLAD^{™} NX 8000, available from Milliken Chemical). The one or more additives can be included in the blend at levels typically used in the art to achieve their desired purpose. In some examples, the one or more additives are included in amounts ranging from 0-10 wt.% of the blend, 0-5 wt.% of the blend, 0.001-5 wt.% of the blend, 0.001-3 wt.% of the blend, 0.05-3 wt.% of the blend, or 0.05-2 wt.% of the blend.

The components of the blend may be immiscible, miscible, or compatible with each other. In embodiments herein, the blend may be formed by a variety of methods. For example, it may be made by blending or mixing the polymer components together. Blending or mixing can be accomplished by any suitable mixing means known in the art, including melt or dry/physical blending of the individual components. It should be understood that other suitable methods for blending or mixing the polymer components together may be utilized.

The monolayer films described herein may be made via any number of processes. Exemplary processes may include making the monolayer film into a cast film where the polymer is extruder through a flat die to create a flat film, or making the monolayer film into a blown film whereby the polymer is extruded through an annular die and creates a tube of film that can be slit to create the flat film.

In embodiments herein, the monolayer film may have a basis weight of between about 10-25 gsm. All individual values and subranges from 10-25 gsm are included and disclosed herein. For example, in some embodiments, the monolayer film may have a basis weight of between about 10-23, 10-21, 10-20, or 10-18 gsm. In other embodiments, the monolayer film may have a basis weight of between about 10-16 gsm. In further embodiments, the monolayer film may have a basis weight of between about 10-14 gsm.

### Nonwoven Substrate

Nonwoven substrates include nonwoven webs, nonwoven fabrics and any nonwoven structure in which individual fibers or threads are interlaid, but not in a regular or repeating manner. Nonwoven substrates described herein may be formed by a variety of processes, such as, for example, air laying processes, meltblowing processes, spunbonding processes and carding processes, including bonded carded web processes. The nonwoven web may comprise a single web, such as a spunbond web, a carded web, an airlaid web, a spunlaced web, or a meltblown web. However, because of the relative strengths and weaknesses associated with the different processes and materials used to make nonwoven fabrics, composite structures of more than one layer are often used in order to achieve a better balance of properties. Such structures are often identified by letters designating the various lays such as SM for a two layer structure consisting of a spunbond layer and a meltblown layer, SMS for a three layer structure, or more generically SXₙS structures, where X can be independently a spunbond layer, a carded layer, a wetlaid layer, an airlaid layer, a spunlaced layer, or a meltblown layer and n can be any number, although for practical purposes is generally less than 5. In order to maintain structural integrity of such composite structures, the layers must be bonded together. Common methods of bonding include point bonding, adhesive lamination, and other methods known to those skilled in the art. All of these structures may be used in the present invention. The fibers which make up the nonwoven web may be monocomponent or bicomponent fibers.

In embodiments herein, the nonwoven substrate may be formed from a propylene-based material, 100% polyethylene, or polyethylene/polypropylene blends. Examples of suitable propylene-based materials include materials that comprise a majority weight percent of polymerized propylene monomer (based on the total amount of polymerizable monomers), and optionally, one or more comonomers. This may include propylene homopolymer (i.e., a polypropylene), a propylene copolymer, or combinations thereof. The propylene copolymer may be a propylene/olefin copolymer. Examples of suitable olefin comonomers include ethylene, C₄-C₂₀ α-olefins, such as 1-butene, 1-pentene, 1-hexene, 4-methyl-1-pentene, 1-heptene, 1-octene, 1-decene, or 1-dodecene. In some embodiments, the nonwoven substrate is formed from a polypropylene resin.

As previously mentioned, the nonwoven substrate may comprise one or more layers. In some embodiments, the nonwoven substrate comprises at least one spunbond layer (S) and at least one meltblown layer (M). In other embodiments, the nonwoven substrate comprises at least one spunbond layer (S) or at least one meltblown layer (M), and may have one of the following structures: SSS, SM, SMS, SMMS, SSMMS, or SSMMMS. The outermost spunbond layer may comprise a material selected from the group consisting of spunbond homopolymer polypropylene (hPP), spunbond heterogeneously branched polyethylene, or carded hPP.

The ultrasonically-bonded laminates comprise a monolayer film as previously described herein, and a nonwoven substrate at least partially ultrasonically bonded to the multilayer film to form a laminate. The ultrasonically-bonded laminates described herein may exhibit a peel strength of greater than about 0.88 N/cm (0.5 lb_{f}/in), 1.14 N/cm (0.65 lb_{f}/in), 1.31 N/cm (0.75 lb_{f}/in), 1.75 N/cm (1.0 lb_{f}/in), 1.93 N/cm (1.10 lb_{f}/in), or 2.28 N/cm (1.30 lb_{f}/in).

### End Uses

The ultrasonically bonded laminates described herein may be used in a variety of applications. In some embodiments, the laminates can be used in hygiene applications, such as diapers, training pants, and adult incontinence articles, or in other similar absorbent garment applications. In other embodiments, the laminates can be used in medical applications, such as medical drapes, gowns, and surgical suits, or in other similar fabric (woven or nonwoven) applications.

The laminates may be breathable or non-breathable. As used herein, the term "breathable" refers to a material which is permeable to water vapor. The water vapor transmission rate (WVTR) or moisture vapor transfer rate (MVTR) is measured in grams per square meter per 24 hours, and shall be considered equivalent indicators of breathability. The term "breathable" refers to a material which is permeable to water vapor having a minimum WVTR (water vapor transmission rate) of greater than about 100 g/m²/24 hours. In some embodiments, the breathability is greater than about 300 g/m²/24 hours. In other embodiments, the breathability is greater than about 500 g/m²/24 hours. In further embodiments, the breathability is greater than about 1000 g/m²/24 hours.

The WVTR of films or laminates, in one aspect, gives an indication of how comfortable the article would be to wear. Often, hygiene applications of breathable films or laminates desirably have higher WVTRs and laminates of the present invention can have WVTRs exceeding about 1,200 g/m²/24 hours, 1,500 g/m²/24 hours, 1,800 g/m²/24 hours or even exceeding 2,000 g/m²/24 hours. A suitable technique for determining the WVTR (water vapor transmission rate) value of a laminate material of the invention is the test procedure standardized by INDA (Association of the Nonwoven Fabrics Industry), number IST-70.4-99, entitled "STANDARD TEST METHOD FOR WATER VAPOR TRANSMISSION RATE THROUGH NONWOVEN AND PLASTIC FILM USING A GUARD FILM AND VAPOR PRESSURE SENSOR". The INDA procedure provides for the determination of WVTR, the permanence of the film to water vapor and, for homogeneous materials, water vapor permeability coefficient.

Breathable films may be obtained by adding fillers, like CaCO₃, clay, silica, alumina, talc, to make moisture breathable films of high WVTR, which requires a postorientation process, such as machine direction orientation or the use of inter-digitating or inter-meshing rollers, also called "ring rolling", to create cavitation around the filler particles (*see,* for example, WO2007/081548 or WO1998/004397 ). Enhanced moisture permeation in such films is a result of microporous morphology. Such films are commonly used hygiene applications for diaper and adult incontinence backsheet films and in medical applications such as breathable but liquid impermeable surgical gowns and can yield WVTR values of greater than 500 g/m²/24 hours up to 20,000 g/m²/24 hours, depending upon the level of CaCO₃ and stretching, for films ranging in thickness from 5.1 to 38.1 µm (0.2 to 1.5 mils) thickness.

The laminate may be a backsheet laminate.

The ultrasonically-bonded laminate may consist essentially of the monolayer film and the nonwoven substrate at least partially ultrasonically bonded to the monolayer film. The laminate may be a backsheet laminate.

### TEST METHODS

Unless otherwise stated, the following test methods are used. All test methods are current as of the filing date of this disclosure.

### Density

Densities disclosed herein for ethylene-based and propylene-based polymers are determined according to ASTM D-792.

### Melt Index

Melt index, or I₂, for ethylene-based polymers is determined according to ASTM D1238 at 190°C, 2.16 kg.

### Melt Flow Rate

Melt Flow Rate, or MFR, for propylene-based polymers is measured in accordance with ASTM D1238 at 230°C, 2.16 kg.

### Melt Strength

Melt Strength measurements are conducted on a Gottfert Rheotens 71.97 (Göettfert Inc.; Rock Hill, SC) attached to a Gottfert Rheotester 2000 capillary rheometer. A polymer melt (about 20-30 grams, pellets) is extruded through a capillary die with a flat entrance angle (180 degrees) with a capillary diameter of 2.0 mm and an aspect ratio (capillary length/capillary diameter) of 15. After equilibrating the samples at 190°C for 10 minutes, the piston is run at a constant piston speed of 0.265 mm/second. The standard test temperature is 190°C. The sample is drawn uniaxially to a set of accelerating nips located 100 mm below the die, with an acceleration of 2.4 mm/second2. The tensile force is recorded as a function of the take-up speed of the nip rolls. Melt strength is reported as the plateau force (cN) before a strand breaks. The following conditions are used in the melt strength measurements: plunger speed = 0.265 mm/second; wheel acceleration = 2.4 mm/s2; capillary diameter = 2.0 mm; capillary length = 30 mm; and barrel diameter = 12 mm.

### 2% Secant Modulus/Break Stress

Tensile properties, including the secant modulus at 2% strain and the break stress, are determined in the machine and cross directions according to ASTM D882.

### Spencer Dart Impact Strength

The Spencer dart impact test is determined according to ASTM D3420, Procedure B.

### Peel Strength

Films are ultrasonically bonded to a nonwoven to form a laminate. The specimen size is 127 mm X 25.4 mm. Five specimens are measured per laminate. Peel force is determined by separating the film from a nonwoven substrate, and is a measure of the energy required to separate the layers per unit area. At a first end of the specimen, one inch of the film is manually separated from the nonwoven substrate to form a starting gap. The film is placed in the movable grip of a CRE tensile testing machine (Instron) while the nonwoven substrate is placed in a stationary 180° plane. The films are peeled from the nonwoven substrate at a rate of about 304.8 mm/min.

### Puncture Resistance

Puncture is measured on a tensile testing machine according to ASTM D5748, except for the following: square specimens are cut from a sheet to a size of 15.2 cm (6 inches) by 15.2 cm (6 inches); the specimen is clamped in a 10.2 cm (4 inch) diameter circular specimen holder and a puncture probe is pushed into the center of the clamped film at a cross head speed of 25.4 cm/minute (10 inches/minute); the probe is a 1.3 cm (0.5 inch) diameter polished steel ball on a 0.64 cm (0.25 inch) support rod; there is a 19.6 cm (7.7 inch) maximum travel length to prevent damage to the test fixture; there is no gauge length - prior to testing, the probe is as close as possible to, but not touching, the specimen. A single thickness measurement is made in the center of the specimen. A total of five specimens are tested to determine an average puncture value.

### EXAMPLES

The embodiments described herein may be further illustrated by the following examples.

### Resins Used

The following resins: a low density polyethylene (LDPE) is a high pressure low density polyethylene made in an autoclave reactor having has a density of 0.918 g/cc and a melt index of 8.0 g/10 min (LDPE 722 from The Dow Chemical Company, USA); a linear polyethylene 1 having a density of 0.917 g/cc and a melt index of 2.3 g/10 min (DOWLEX^{™} 2247 from The Dow Chemical Company, USA); a linear polyethylene 2 having a density of 0.935 g/cc and a melt index of 2.5 g/10 min (DOWLEX^{™} 2036 from The Dow Chemical Company, USA); a linear polyethylene 3 having a density of 0.947 g/cc and a melt index of 6.0 g/10 min (AGILITY^{™} 6047G from The Dow Chemical Company, USA); and a polypropylene resin, which is an isotactic polypropylene homopolymer having a density of 0.900 g/cc and a melt flow rate of 20 g/10 min (Polypropylene 6231, available from LyondellBasell Industries, USA).

### Inventive Films

Monolayer films were made as outlined below. The films were produced on a three layer Colin cast line having a maximum line speed of 20 m/min, a melt temperature of 230°C, a die temp of 230°C, a die gap of 20.3 µm (0.8 mils), and an air gap of 20.3 cm (8 in). Each layer of the three layer line had the same composition as outlined below. The monolayer films have a basis weight of 25 gsm. The monolayer films were ultrasonically bonded to a polypropylene nonwoven substrate using a HiQ DIALOG ultrasound device.

**Inventive Film 1**

| **Inventive Example 1** | Outer (wt.%) | Core (wt.%) | Outer (wt.%) |
|---|---|---|---|
| LDPE | 10 | 10 | 10 |
| Linear PE 1 | -- | -- | -- |
| Linear PE 2 | 63 | 63 | 63 |
| Linear PE 3 | -- | -- | -- |
| Polypropylene | 27 | 27 | 27 |

**Inventive Film 2**

| **Inventive Example 2** | Outer (wt.%) | Core (wt.%) | Outer (wt.%) |
|---|---|---|---|
| LDPE | 10 | 10 | 10 |
| Linear PE 1 | -- | -- | -- |
| Linear PE 2 | -- | -- | -- |
| Linear PE 3 | 63 | 63 | 63 |
| Polypropylene | 27 | 27 | 27 |

### Comparative Films

The films were made as outlined below. The films were produced on a three layer Colin cast line having a maximum line speed of 20 m/min, a melt temperature of 230°C, a die temp of 230°C, a die gap of 20.3 µm (0.8 mils), and an air gap of 20.3 cm (8 in). The films have a basis weight of 25 gsm. For comparative films 1 and 2, the core layer comprises 70% of the overall film thickness, and each outer layer comprises 15% of the overall film thickness. For comparative film 3, the film is a monolayer film with each layer of the three layer line having the same composition, similar to inventive films 1 and 2.

**Comparative Film 1**

| **Comparative Example 1** | Outer (wt.%) | Core (wt.%) | Outer (wt.%) |
|---|---|---|---|
| LDPE | 10 | 10 | 10 |
| Linear PE 1 | -- | -- | -- |
| Linear PE 2 | -- | 90 | -- |
| Linear PE 3 | -- | -- | -- |
| Polypropylene | 90 | -- | 90 |

**Comparative Film 2**

| **Comparative Example 2** | Outer (wt.%) | Core (wt.%) | Outer (wt.%) |
|---|---|---|---|
| LDPE | 10 | -- | 10 |
| Linear PE 1 | -- | -- | -- |
| Linear PE 2 | -- | -- | -- |
| Linear PE 3 | -- | 90 | -- |
| Polypropylene | 90 | -- | 90 |

**Comparative Film 3**

| **Comparative Example 3** | Outer (wt.%) | Core (wt.%) | Outer (wt.%) |
|---|---|---|---|
| LDPE | 10 | 10 | 10 |
| Linear PE 1 | 63 | 63 | 63 |
| Linear PE 2 | -- | -- | -- |
| Linear PE 3 | -- | -- | -- |
| Polypropylene | 27 | 27 | 27 |

### Preparation of Laminates

The inventive and comparative films are point bonded using ultrasonic bonding to a spunbond polypropylene nonwoven having a basis weight of 18 gsm. The films are ultrasonically bonded using a HiQ DIALOG ultrasound device. The welding force was 800-2300 N, the frequency was 20 KHz, the amplitude was 25 microns, and the bonding time was 300 msec.

### Results

**Table 1 - Film Properties**

| | Inventive example 1 | Inventive example 2 | Comp. example 1 | Comp. example 2 | Comp. example 3 |
|---|---|---|---|---|---|
| Puncture resistance, ft∗lb_{f}/in³ | -- | -- | -- | -- | 103.1 |
| Spencer Dart Impact, g_{f}/mil | -- | -- | -- | -- | 507.6 |
| 2% Secant Modulus CD, MPa (psi) | -- | -- | -- | -- | 297.3 (43,120.9) |
| 2% Secant Modulus MD, MPa (psi) | -- | -- | -- | -- | 275.7 (39,983.0) |
| Break Stress CD, MPa (psi) | -- | -- | -- | -- | 18.8 (2,726.2) |
| Break Stress MD, MPa (psi) | -- | -- | -- | -- | 39.4 (5,717.1) |

**Table 2 - Laminate Properties**

| | Inventive example 1 | Inventive example 2 | Comp. example 1 | Comp. example 2 | Comp. example 3 |
|---|---|---|---|---|---|
| Peel Strength @ 1700N N/cm (lb_{f}/in) | 3.41 (1.95) | 4.59 (2.62) | 2.21 (1.26) | 1.82 (1.04) | 1.10 (0.63) |

As shown in Table 2, the inventive laminate 1, which uses a monolayer film, has a surprisingly high peel strength when compared to comparative laminate 1, which uses a multilayer film. Similarly, inventive laminate 2, which uses a monolayer film, has a surprisingly high peel strength when compared to comparative laminate 2, which uses a multilayer film. Comparative laminate 3, which uses a monolayer film comprising a linear polyethylene having a density of less than 0.925 g/cc, also does not perform as well for peel strength when compared to the inventive laminates.

## Claims

1. An ultrasonically bonded laminate comprising:
a monolayer film comprising a blend of (a) from 50 to 90 wt.% of a linear polyethylene having a density ranging from 0.925 g/cc to 0.970 g/cc, determined according to ASTM D-792, and a melt index, I₂, from 0.1 to 15 g/10 min, determined according to ASTM D1238 at 190°C, 2.16 kg, (b) from 10 to 50 wt.% of polypropylene having a melt flow rate from 0.1 to 100 g/10 min, measured in accordance with ASTM D1238 at 230°C, 2.16 kg, and (c) optionally, a low density polyethylene; and
a nonwoven substrate at least partially ultrasonically bonded to the monolayer film.

2. The laminate of claim 1, wherein the monolayer film is a monolayer cast film.

3. The laminate of claim 1, wherein the polypropylene is a polypropylene homopolymer or a polypropylene copolymer.

4. The laminate of claim 3, wherein the polypropylene homopolymer is isotactic, atactic, or syndiotactic.

5. The laminate of claim 3, wherein the polypropylene copolymer is a random or block propylene/olefin copolymer or a propylene impact copolymer.

6. The laminate of claim 1, wherein the film comprises from 5 to 40 wt.% of a low density polyethylene.

7. The laminate of claim 1, wherein the low density polyethylene has a density of from 0.915 g/cc to 0.935 g/cc, determined according to ASTM D-792, and a melt index, I₂, from 0.1 g/10 min to 15 g/10min, determined according to ASTM D1238 at 190°C, 2.16 kg.

8. The laminate of claim 1, wherein the nonwoven substrate is formed from a polypropylene resin.

9. The laminate of claim 1, wherein the laminate is a backsheet laminate.

10. The ultrasonically-bonded laminate of claim 1, wherein the ultrasonically-bonded laminate consists essentially of said monolayer film and said nonwoven substrate at least partially ultrasonically bonded to the monolayer film.

11. The laminate of claim 10, wherein the laminate is a backsheet laminate.

## Patentansprüche

1. Ein ultraschallgebondetes Laminat, das Folgendes beinhaltet:
eine einschichtige Folie, die eine Mischung aus (a) zu 50 bis 90 Gew.-% einem linearen Polyethylen, das eine Dichte in dem Bereich von 0,925 g/cm³ bis 0,970 g/cm³, bestimmt gemäß ASTM D-792, und einen Schmelzindex I₂ von 0,1 bis 15 g/10 min, bestimmt gemäß ASTM D1238 bei 190 °C, 2,16 kg, aufweist, (b) zu 10 bis 50 Gew.-% Polypropylen, das eine Schmelzflussrate von 0,1 bis 100 g/10 min, gemessen gemäß ASTM D1238 bei 230 °C, 2,16 kg, aufweist, und (c) optional einem Polyethylen niederer Dichte beinhaltet; und
ein Vliesstoffsubstrat, das mindestens teilweise mit der einschichtigen Folie ultraschallgebondet ist.

2. Laminat gemäß Anspruch 1, wobei die einschichtige Folie eine einschichtige Gussfolie ist.

3. Laminat gemäß Anspruch 1, wobei das Polypropylen ein Polypropylenhomopolymer oder ein Polypropylencopolymer ist.

4. Laminat gemäß Anspruch 3, wobei das Polypropylenhomopolymer isotaktisch, ataktisch oder syndiotaktisch ist.

5. Laminat gemäß Anspruch 3, wobei das Polypropylencopolymer ein statistisches Propylen-Olefin-Copolymer oder Propylen-Olefin-Blockcopolymer oder ein schlagfestes Propylencopolymer ist.

6. Laminat gemäß Anspruch 1, wobei die Folie zu 5 bis 40 Gew.-% ein Polyethylen niederer Dichte beinhaltet.

7. Laminat gemäß Anspruch 1, wobei das Polyethylen niederer Dichte eine Dichte von 0,915 g/cm³ bis 0,935 g/cm³, bestimmt gemäß ASTM D-792, und einen Schmelzindex I₂ von 0,1 g/10 min bis 15 g/10 min, bestimmt gemäß ASTM D1238 bei 190 °C, 2,16 kg, aufweist.

8. Laminat gemäß Anspruch 1, wobei das Vliesstoffsubstrat aus einem Polypropylenharz gebildet ist.

9. Laminat gemäß Anspruch 1, wobei das Laminat ein Rückwandlaminat ist.

10. Ultraschallgebondetes Laminat gemäß Anspruch 1, wobei das ultraschallgebondete Laminat im Wesentlichen aus der einschichtigen Folie und dem Vliesstoffsubstrat, das mindestens teilweise mit der einschichtigen Folie ultraschallgebondet ist, besteht.

11. Laminat gemäß Anspruch 10, wobei das Laminat ein Rückwandlaminat ist.

## Revendications

1. Un stratifié lié par ultrasons comprenant :
un film monocouche comprenant un mélange homogène (a) de 50 à 90 % en poids d'un polyéthylène linéaire ayant une masse volumique comprise dans l'intervalle allant de 0,925 g/cm³ à 0,970 g/cm³, déterminée selon l'ASTM D-792, et un indice de fusion, I₂, de 0,1 à 15 g/10 min, déterminé selon l'ASTM D1238 à 190 °C, 2,16 kg, (b) de 10 à 50 % en poids de polypropylène ayant un indice de fluidité à l'état fondu de 0,1 à 100 g/10 min, mesuré conformément à l'ASTM D1238 à 230 °C, 2,16 kg, et (c) facultativement, d'un polyéthylène basse densité ; et
un substrat non tissé au moins partiellement lié par ultrasons au film monocouche.

2. Le stratifié de la revendication 1, dans lequel le film monocouche est un film coulé monocouche.

3. Le stratifié de la revendication 1, dans lequel le polypropylène est un homopolymère de polypropylène ou un copolymère de polypropylène.

4. Le stratifié de la revendication 3, dans lequel l'homopolymère de polypropylène est isotactique, atactique, ou syndiotactique.

5. Le stratifié de la revendication 3, dans lequel le copolymère de polypropylène est un copolymère de propylène/oléfine aléatoire ou bloc ou un copolymère choc de propylène.

6. Le stratifié de la revendication 1, dans lequel le film comprend de 5 à 40 % en poids d'un polyéthylène basse densité.

7. Le stratifié de la revendication 1, dans lequel le polyéthylène basse densité a une masse volumique allant de 0,915 g/cm³ à 0,935 g/cm³, déterminée selon l'ASTM D-792, et un indice de fusion, I₂, de 0,1 g/10 min à 15 g/10 min, déterminé selon l'ASTM D1238 à 190 °C, 2,16 kg.

8. Le stratifié de la revendication 1, dans lequel le substrat non tissé est formé à partir d'une résine de polypropylène.

9. Le stratifié de la revendication 1, le stratifié étant un stratifié de feuillet arrière.

10. Le stratifié lié par ultrasons de la revendication 1, le stratifié lié par ultrasons consistant essentiellement en ledit film monocouche et ledit substrat non tissé au moins partiellement lié par ultrasons au film monocouche.

11. Le stratifié de la revendication 10, le stratifié étant un stratifié de feuillet arrière.
